# DEMANDE DE BREVET EUROPEEN

(11) **EP 2 109 058 A1**
(43) Date de publication de la demande: **14.10.2009**
(21) Numéro de dépôt: 09157496.2
(22) Date de dépôt: 07.04.2009
(51) Int. Cl.: G06K 7/00, G07F 7/08

(54) **Terminal de paiement électronique pour automate**

(30) Priorité: 07.04.2008 FR 0852298
(71) Demandeur: Ingenico France, 92200 Neuilly Sur Seine (FR)
(72) Inventeur: Soubirane, Alain, 26500 Bourg Les Valence (FR); Pavageau, Stéphane, 92200, NEUILLY-SUR-SEINE (FR)
(74) Mandataire: de Beaumont, Michel

(57) **Abrégé**

L'invention concerne un terminal de paiement (10) comprenant une enceinte sécuritaire (15) comportant une fente (31) et une ouverture (33). Un lecteur de cartes (30) est disposé dans l'enceinte. Le terminal comprend, en outre, un réceptacle (24) mobile par rapport à l'enceinte entre une première position dans laquelle le réceptacle est appliqué contre l'enceinte autour de l'ouverture de sorte qu'un objet autre qu'une carte introduit dans l'enceinte par la fente est susceptible de tomber au travers de l'ouverture dans le réceptacle, et une deuxième position dans laquelle le contenu du réceptacle est accessible depuis l'extérieur du terminal. De plus, le terminal comprend un système d'obturation (36A, 36B, 36C) sécurisé mobile par rapport à l'enceinte entre une troisième position dans laquelle le système d'obturation ne recouvre pas complètement l'ouverture et une quatrième position dans laquelle le système d'obturation recouvre complètement l'ouverture.

## Description

### Domaine de l'invention

La présente invention concerne les terminaux de paiement électroniques, notamment les terminaux de paiement électroniques pour des automates tels que des distributeurs de tickets, de boissons, de vidéocassettes, etc. Plus particulièrement, la présente invention vise un terminal de paiement comprenant un lecteur de cartes, par exemple de cartes à puce à lecture par contacts et/ou de cartes munies de pistes magnétiques.

### Exposé de l'art antérieur

Les automates qui comprennent des terminaux de paiement électroniques doivent respecter certaines contraintes de sécurité. En particulier, les standards de sécurité pour les terminaux de paiement électroniques imposent que le terminal comprenne une zone sécurisée, correspondant généralement à une enceinte fermée et dont l'accès n'est autorisé qu'à un opérateur habilité. Les composants à protéger du terminal de paiement, par exemple le processeur de commande du terminal et le lecteur de cartes, sont disposés dans l'enceinte sécurisée. Des dispositifs de protection permettent de détecter une intrusion non autorisée dans l'enceinte sécurisée, ce qui peut entraîner l'émission d'un signal d'alarme, l'effacement de données sensibles stockées dans une mémoire du terminal de paiement, l'arrêt du terminal de paiement, etc. En fonctionnement normal, le seul accès de l'enceinte sécurisée correspond généralement à une fente par laquelle on peut introduire une carte destinée à être lue par le lecteur du terminal de paiement.

Les automates munis de terminaux de paiement peuvent faire l'objet d'actes de vandalisme. Un exemple d'acte de vandalisme consiste en l'introduction d'objets dans l'enceinte sécurisée par la fente d'accès jusqu'à bourrer le terminal de paiement et en empêcher le fonctionnement. La remise en état du terminal de paiement nécessite alors généralement que le terminal soit envoyé vers un site de maintenance pour y être démonté, débourré, puis remonté et réactivé par des opérateurs habilités.

Certains terminaux de paiement comprennent, dans l'enceinte sécurisée, un réceptacle formant une poubelle dans laquelle tombent les objets introduits par la fente d'accès du terminal de paiement. Ceci permet de réduire la fréquence de bourrage du terminal. Toutefois, la poubelle faisant partie de l'enceinte sécurisée du terminal de paiement, il est également nécessaire que le terminal de paiement soit envoyé vers un site de maintenance pour vider la poubelle.

De telles opérations de maintenance présentent un coût élevé et rendent l'automate inutilisable pendant une durée importante.

### Résumé de l'invention

La présente invention vise un terminal de paiement électronique pour automate comprenant une enceinte délimitant une zone sécurisée contenant un lecteur de cartes, une fente d'accès étant prévue dans l'enceinte pour l'introduction d'une carte, le terminal comprenant, en outre, une poubelle de récupération d'objets introduits par la fente d'accès, dans lequel le vidage de la poubelle peut être réalisé sans accéder à la zone sécurisée.

Selon un autre objet, la poubelle se trouve dans la zone sécurisée du terminal de paiement lors du fonctionnement normal du terminal.

La présente invention vise également un procédé d'utilisation d'un terminal de paiement comprenant une enceinte délimitant une zone sécurisée contenant un lecteur de cartes, une fente d'accès étant prévue dans l'enceinte pour l'introduction d'une carte, le terminal comprenant, en outre, une poubelle de récupération d'objets introduits par la fente, le procédé permettant de vider la poubelle sans accéder à la zone sécurisée.

Ainsi, un aspect de la présente invention prévoit un terminal de paiement comprenant une enceinte sécuritaire comportant une fente et une ouverture, un lecteur de cartes disposé dans l'enceinte, un réceptacle mobile par rapport à l'enceinte entre une première position dans laquelle le réceptacle est appliqué contre l'enceinte autour de l'ouverture de sorte qu'un objet autre qu'une carte introduit dans l'enceinte par la fente est susceptible de tomber au travers de l'ouverture dans le réceptacle, et une deuxième position dans laquelle le contenu du réceptacle est accessible depuis l'extérieur du terminal et un système d'obturation sécurisé et mobile par rapport à l'enceinte entre une troisième position dans laquelle le système d'obturation ne recouvre pas complètement l'ouverture et une quatrième position dans laquelle le système d'obturation recouvre complètement l'ouverture.

Selon un exemple de réalisation, le terminal comprend un interrupteur disposé dans l'enceinte sécuritaire, le réceptacle comprenant une portion adaptée à actionner l'interrupteur lorsque le réceptacle est à la première position et à ne pas actionner l'interrupteur dès que le réceptacle quitte la première position.

Selon un exemple de réalisation, le terminal comprend, en outre, un premier dispositif de protection comportant au moins une première piste conductrice s'étendant sur les parois de l'enceinte et un premier système de détection d'une interruption et/ou d'une altération de la première piste.

Selon un exemple de réalisation, la première piste s'étend au niveau du réceptacle et/ou au niveau du système d'obturation.

Selon un exemple de réalisation, le terminal comprend un deuxième dispositif de protection comportant au moins une deuxième piste conductrice s'étendant au niveau du réceptacle et un deuxième système de détection d'une interruption et/ou d'une altération de la deuxième piste disposé dans l'enceinte, le terminal comprenant, en outre, un premier connecteur adapté à connecter électriquement la deuxième piste au deuxième système de détection lorsque le réceptacle est dans la première position et à ne pas connecter électriquement la deuxième piste au deuxième système de détection dès que le réceptacle quitte la première position.

Selon un exemple de réalisation, le terminal comprend un troisième dispositif de protection comportant au moins une troisième piste conductrice s'étendant au niveau du système d'obturation et un troisième système de détection d'une interruption et/ou d'une altération de la troisième piste disposé dans l'enceinte, le terminal comprenant, en outre, un deuxième connecteur, correspondant éventuellement au premier connecteur, adapté à connecter électriquement la troisième piste au troisième système de détection lorsque le système d'obturation est dans la quatrième position et à ne pas connecter électriquement la troisième piste au troisième système de détection dès que le système d'obturation quitte la quatrième position.

Selon un exemple de réalisation, le terminal comprend un processeur et le réceptacle et/ou le système d'obturation comprend une puce adaptée à échanger des signaux avec le processeur.

Selon un exemple de réalisation, le réceptacle est relié à l'enceinte par une liaison pivotante.

Selon un exemple de réalisation, le système d'obturation comprend au moins un volet coulissant et/ou pivotant.

Un autre aspect de la présente invention prévoit un procédé d'utilisation du terminal de paiement décrit précédemment. Le procédé comprend les étapes consistant à amener le système d'obturation de la troisième position à la quatrième position, le réceptacle étant dans la première position ; à amener le réceptacle de la première position à la deuxième position ; à vider, si nécessaire, le réceptacle ; à amener le réceptacle de la deuxième position d'obturation à la première position et à amener le système d'obturation de la quatrième position à la troisième position, le réceptacle étant dans la première position.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue schématique en perspective d'un exemple de réalisation d'un terminal de paiement électronique selon l'invention ;
la figure 2 est une vue schématique en perspective avec coupe du terminal de paiement de la figure 1 ;
les figures 3 à 5 sont des coupes latérales schématiques du terminal de paiement de la figure 1 à des étapes successives d'une opération de maintenance du terminal ;
les figures 6 et 7 sont des vues schématiques d'exemples de dispositifs de protection du terminal de paiement de la figure 1 ; et
la figure 8 est une vue analogue à la figure 3 d'un autre exemple de réalisation du terminal de paiement selon l'invention.

### Description détaillée

Par souci de clarté, de mêmes éléments ont été désignés par de mêmes références aux différentes figures. En outre, seuls les éléments nécessaires à la compréhension de la présente invention seront décrits par la suite.

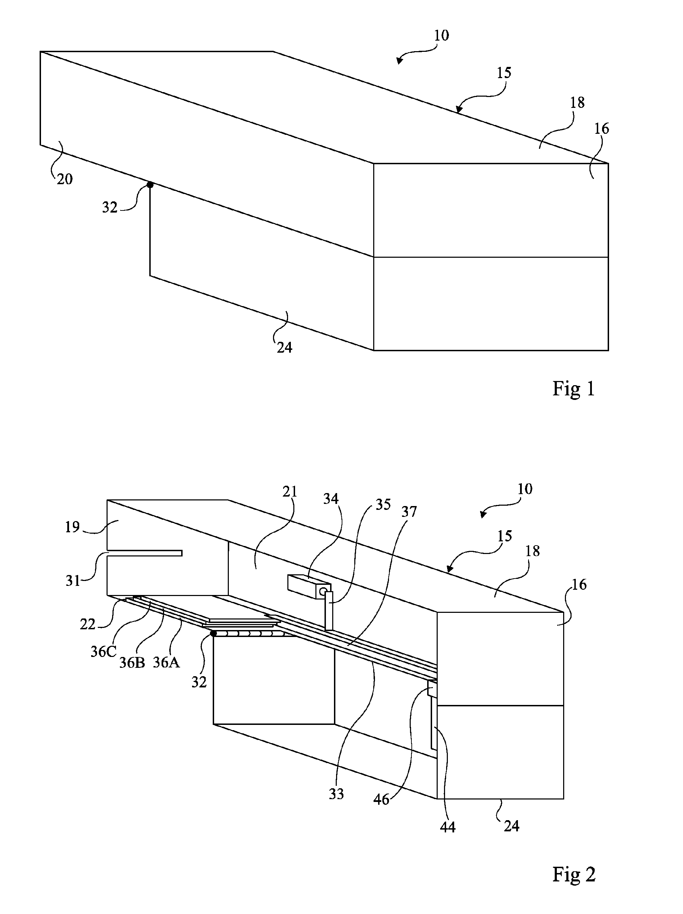

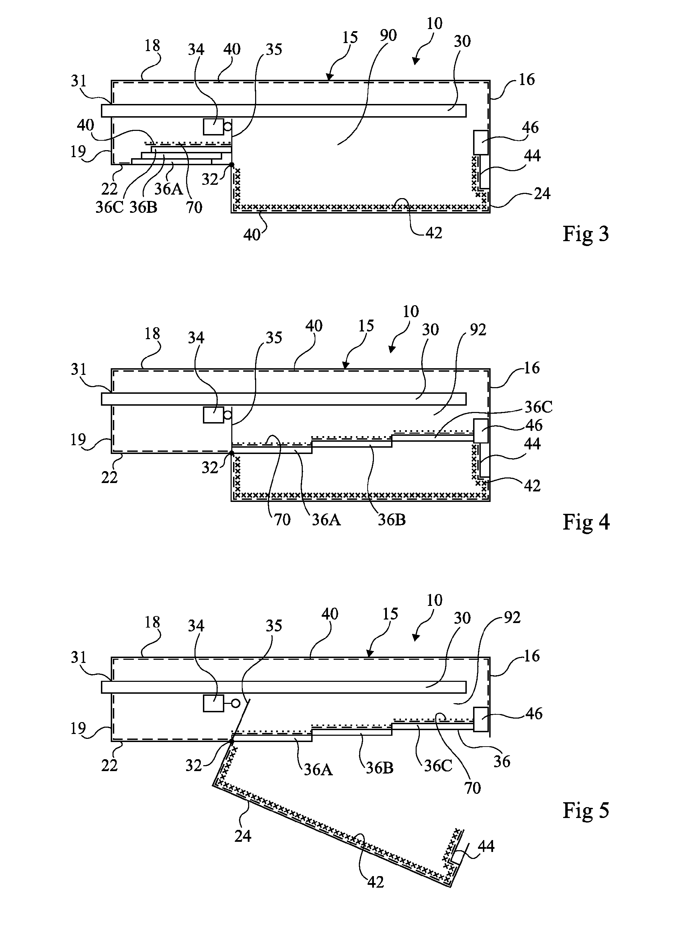

Les figures 1 et 2 sont respectivement une vue en perspective et une vue en perspective avec coupe d'un exemple de réalisation d'un terminal de paiement électronique 10 selon l'invention. Les figures 3 à 5 sont des coupes latérales du terminal de paiement 10 à trois étapes successives lors d'une opération de maintenance. Le terminal de paiement 10 comprend une enceinte 15 constituée d'une paroi arrière 16, d'une paroi supérieure 18, d'une paroi avant 19, de parois latérales 20, 21 et d'une paroi inférieure 22. Dans la suite de la description, on appelle face interne d'une paroi 16, 18, 19, 20, 21 et 22, la face de la paroi orientée vers l'intérieur de l'enceinte 15. Le terminal de paiement comprend également un réceptacle 24 jouant le rôle d'une poubelle et pouvant avoir une forme parallélépipédique ouverte sur une face. Dans la suite de la description, on appelle face interne d'une paroi du réceptacle 24, la face de la paroi orientée vers l'intérieur du réceptacle 24. Un lecteur de cartes, non représenté, est disposé dans l'enceinte 15. Une carte 30, représentée seulement aux figures 3 à 5, peut être introduite dans l'enceinte 15 par l'intermédiaire d'une fente 31 prévue au niveau de la paroi avant 19. Des moyens, non représentés, adaptés à guider la carte 30 vers le lecteur peuvent être prévus dans l'enceinte 15. Un processeur, non représenté, est relié au lecteur et permet de réaliser une opération de paiement.

Le réceptacle 24 est relié à la paroi inférieure 22 par une liaison pivotante 32 et est susceptible de pivoter dans une position de fermeture, représentée en figure 1, dans laquelle le bord libre du réceptacle 24 est appliqué contre l'enceinte 15, la fente 31 étant le seul accès à l'enceinte 15, et une position d'ouverture, représentée en figure 5, dans laquelle le contenu du réceptacle 24 est accessible. La paroi inférieure 22 comprend une ouverture 33 de façon que des objets introduits par la fente 31 tombent dans le réceptacle 24 lors du fonctionnement normal du terminal 10. Le réceptacle 24 entoure complètement l'ouverture 33 dans la position de fermeture. Un interrupteur à contact 34 est disposé dans l'enceinte 15. Le réceptacle 24 comprend un bras 35 qui s'étend dans l'enceinte 15. Lorsque le réceptacle 24 est dans la position de fermeture, le bras 35 est au contact de l'interrupteur 34. L'interrupteur 34 fournit alors un signal représentatif du fait que le réceptacle 24 est dans la position de fermeture. Dès que le réceptacle 24 quitte la position de fermeture, le bras 35 pivote et s'écarte de l'interrupteur 34. A titre d'exemple, ceci entraîne une interruption du signal fourni par l'interrupteur 34 indiquant que le réceptacle 24 n'est plus en position de fermeture. Le déplacement du réceptacle 24 entre les positions d'ouverture et de fermeture peut être réalisé manuellement ou par des actionneurs, non représentés.

Un système d'obturation de l'ouverture 33, constitué de volets 36A, 36B, 36C, est disposé dans l'enceinte 15. Les volets 36A, 36B, 36C sont reliés de façon mobile à la paroi inférieure 22 et peuvent être déplacés entre une position repliée, représentée en figure 1, dans laquelle les volets 36A, 36B, 36C ne recouvrent pas l'ouverture 33 et une position déployée, représentée aux figures 4 et 5, dans laquelle les volets 36A, 36B, 36C recouvrent complètement l'ouverture 33. A titre d'exemple, trois volets 36A, 36B, 36C coulissants sont représentés sur les différentes figures, le volet 36C étant le volet le plus proche de la paroi arrière 16 en position déployée et le volet 36A étant le volet le plus proche de la paroi avant 19 en position déployée. Dans la suite de la description, on appelle bord arrière d'un volet 36A, 36B, 36C, le bord du volet le plus proche de la paroi arrière 16 et bord avant du volet, le bord du volet le plus proche de la paroi avant 19. Une glissière 37, visible en figure 2, guide les volets 36A, 36B, 36C entre les positions repliée et déployée. Les moyens d'actionnement des volets 36A, 36B, 36C ne sont pas représentés.

L'enceinte 15 est munie de dispositifs de protection adaptés à la détection d'accès non autorisés. Un exemple de dispositif de protection, appelé dispositif à treillis, comprend au moins une piste conductrice qui s'étend, par exemple en zigzagant, sur une pièce à protéger et dont les extrémités sont connectées à un système de détection. Une interruption et/ou une altération de la piste métallique, qui est généralement caractéristique d'une manipulation non autorisée de la pièce à protéger, est détectée par le système de détection et peut entraîner l'émission d'un signal d'alarme, l'effacement de données stockées par le terminal de paiement 10, l'arrêt du terminal de paiement 10, etc.

Selon le présent exemple de réalisation, un dispositif à treillis 40, non représenté en figure 2 et représenté de façon schématique par des traits pointillés aux figures 3 à 5, est prévu au niveau des parois 16, 18, 19, 20, 21 et 22. Le dispositif à treillis 40 s'étend également au niveau du réceptacle 24 et au niveau des volets 36A, 36B, 36C. A titre d'exemple, le dispositif à treillis 40 comprend au moins une piste conductrice qui s'étend au niveau des faces internes des parois 16, 18, 19, 20, 21 et 22 et du réceptacle 24. La piste conductrice du dispositif à treillis 40 s'étend au niveau des faces des volets 36A, 36B, 36C orientées vers la paroi supérieure 18.

Le terminal 10 peut comprendre un deuxième dispositif à treillis 42 qui s'étend au niveau du réceptacle 24. Le dispositif à treillis 42 n'est pas représenté en figure 2 et est représenté de façon schématique par des croix aux figures 3 à 5. Le dispositif à treillis 42 comprend au moins une piste conductrice qui s'étend sur les faces internes du réceptacle 24 et qui n'est pas en contact électrique avec la piste du dispositif à treillis 40. Le réceptacle 24 comprend une patte 44 qui, lorsque le réceptacle 24 est dans la position de fermeture, pénètre dans un connecteur 46 fixé à la face interne de la paroi arrière 16. Les extrémités de la piste conductrice du dispositif à treillis 42 sont disposées au niveau de la patte 44 de façon que, lorsque le réceptacle 24 est en position de fermeture, elles soient connectées électriquement au connecteur 46. Le connecteur 46 est, par ailleurs, connecté électriquement au système de détection du dispositif à treillis 42 qui est disposé dans l'enceinte 15. Le connecteur 46 assure ainsi la connexion électrique entre la piste conductrice du dispositif à treillis 42 et le système de détection associé seulement lorsque le réceptacle 24 est dans la position de fermeture. Le connecteur 46 n'est pas accessible depuis l'extérieur du terminal lorsque le réceptacle 24 est dans la position de fermeture.

Le terminal 10 peut comprendre un troisième dispositif à treillis 70 qui s'étend au niveau des volets 36A, 36B, 36C. Le dispositif à treillis 70 n'est pas représenté en figure 2 et est représenté de façon schématique par des points aux figures 3 à 5. Le dispositif à treillis 70 comprend au moins une piste conductrice qui s'étend au niveau des faces des volets 36A, 36B, 36C orientées vers la paroi supérieure 18 sans être au contact électrique des pistes du dispositif à treillis 40. Lorsque les volets 36A, 36B, 36C sont en position déployée, la piste du dispositif à treillis 70 est connectée électriquement au connecteur 46. Le connecteur 46 est, par ailleurs, connecté électriquement au système de détection du dispositif à treillis 70. Le connecteur 46 assure ainsi la connexion électrique entre la piste du dispositif à treillis 70 et le système de détection associé seulement lorsque les volets 36A, 36B, 36C sont dans la position déployée. Le connecteur 46 peut être composé de plusieurs connecteurs distincts.

A titre d'exemple, chaque dispositif à treillis 40, 42, 70 peut être constitué par un ou plusieurs circuits imprimés. Selon un exemple, il s'agit d'un circuit imprimé monocouche rigide comprenant un support plan rigide sur lequel sont réparties des pistes conductrices, par exemple en cuivre. Les pistes de circuits imprimés rigides adjacents peuvent alors être connectées entre elles par des points de soudure ou par des fils souples. Selon un autre exemple, il s'agit d'un circuit imprimé monocouche souple constitué d'une membrane souple, de l'ordre de 0,1 mm d'épaisseur, par exemple en kapton (marque déposée par Dupont De Nemours), sur une face de laquelle sont réparties des pistes conductrices, par exemple en cuivre. Des portions du circuit souple peuvent alors être collées sur des faces à protéger et des portions du circuit imprimé souple peuvent être laissées flottantes pour permettre des déplacements relatifs entre des pièces mobiles. Selon un autre exemple, il s'agit d'un circuit imprimé multicouche (souple ou rigide) comprenant un support (souple ou rigide), des pistes conductrices dites internes, par exemple en cuivre, formées sur le support, une couche de vernis isolant recouvrant les pistes conductrices internes et des pistes conductrices dites externes, par exemple en carbone, disposées du côté du support opposé aux pistes conductrices internes. Lorsque les dispositifs à treillis sont réalisés par des circuits imprimés multicouche, les pistes conductrices des dispositifs à treillis peuvent alors se chevaucher.

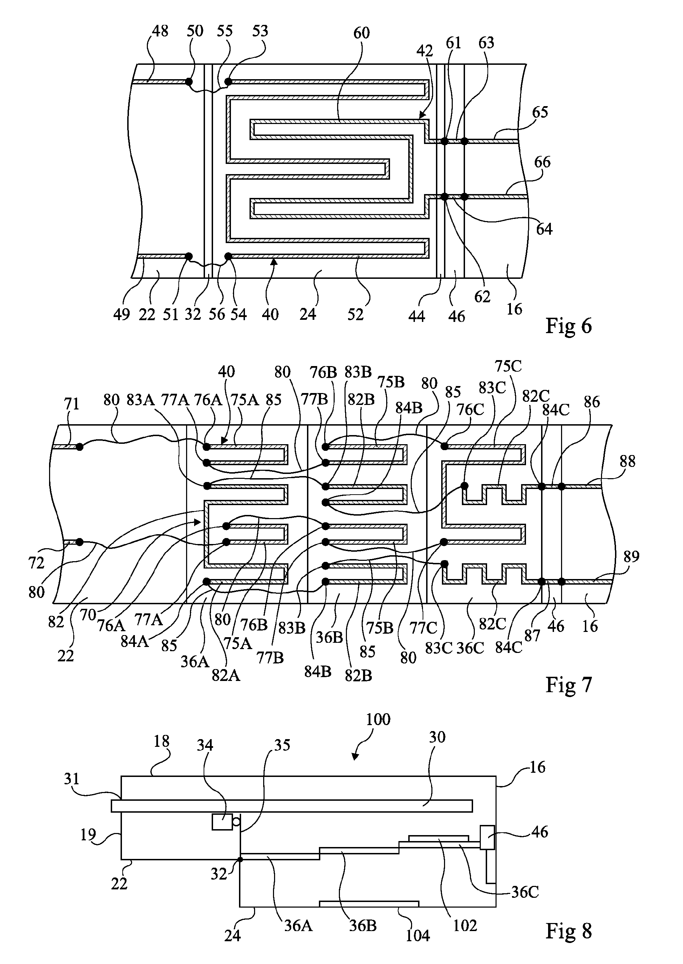

La figure 6 représente schématiquement un exemple de réalisation des dispositifs à treillis 40 et 42 au niveau du réceptacle 24, les dispositifs à treillis étant réalisés par des circuits imprimés rigides monocouches. En figure 6, la paroi inférieure 22, la liaison pivotante 32, le réceptacle 24, le connecteur 46 et la paroi arrière 16 sont représentés par des blocs. Le dispositif à treillis 40 comprend des pistes conductrices 48, 49 disposées sur la paroi inférieure 22 et dont les extrémités 50, 51 sont situées à proximité de la liaison pivotante 32. Le dispositif à treillis 40 comprend, en outre, une piste conductrice 52 disposée au niveau du réceptacle 24 et dont les extrémités 53, 54 sont situées à proximité de la liaison pivotante 32. La liaison entre les extrémités 53, 54 de la piste 52 et les extrémités 50, 51 des pistes 48, 49 est réalisée, par exemple, par des fils conducteurs souples 55, 56 soudés aux extrémités 50, 51, 53, 54. Le dispositif 42 comprend une piste conductrice 60 dont les extrémités 61, 62 sont situées au niveau de la patte 44 du réceptacle 24. La piste 60 est enchevêtrée avec la piste 52 sans toutefois être en contact électrique avec celle-ci. Le connecteur 46 comprend deux pistes conductrices 63, 64 connectées à des pistes conductrices 65, 66 qui s'étendent sur la paroi arrière 16 et qui sont connectées au système de détection associé au dispositif à treillis 42. Lorsque le réceptacle 24 est dans la position de fermeture, les extrémités 61, 62 de la piste 60 sont connectées aux pistes 63, 64.

La figure 7 représente schématiquement un exemple de réalisation des dispositifs à treillis 40 et 70 au niveau des volets 36A, 36B, 36C, les dispositifs à treillis étant réalisés par des circuits imprimés rigides monocouches. En figure 7, la paroi inférieure 22, les volets 36A, 36B, 36C, le connecteur 46 et la paroi arrière 16 sont représentés par des blocs. Le dispositif à treillis 40 comprend des pistes conductrices 71, 72 disposées sur la paroi inférieure 22. Il comprend, en outre, pour chaque volet 36A, 36B, deux pistes conductrices 75A, 75B dont les extrémités 76A, 76B, 77A, 77B sont situées à proximité du bord avant du volet 36A, 36B. Le dispositif à treillis 40 comprend pour le volet 36C, une piste conductrice 75C dont les extrémités 76C, 77C sont situées à proximité du bord avant du volet 36C. Les pistes 71, 72 et les pistes 75A, 75B, 75C sont connectées en série, par exemple, par des fils conducteurs souples 80 soudés aux extrémités des pistes 71, 72, 75A, 75B, 75C. Le dispositif 70 comprend pour le volet 36A, une piste conductrice 82A dont les extrémités 83A, 84A sont situées à proximité du bord avant du volet 36A, pour le volet 36B, deux pistes conductrices 82B dont les extrémités 83B, 84B sont situées à proximité du bord avant du volet 36B et pour le volet 36C, deux pistes conductrices 82C, chaque piste 82C ayant une extrémité 83C située à proximité du bord avant du volet 36C et une extrémité 84C située à proximité du bord arrière du volet 36C. Les pistes 82A, 82B, 82C sont connectées en série, par exemple, par des fils conducteurs souples 85 soudés aux extrémités des pistes 82A, 82B, 82C. Pour chaque volet, les pistes 75A, 75B, 75C et 82A, 82B, 82C sont enchevêtrées sans toutefois être en contact électrique les unes avec les autres. Le connecteur 46 comprend deux pistes conductrices 86, 87 connectées à des pistes conductrices 88, 89 qui s'étendent sur la paroi arrière 16 et qui sont connectées au système de détection associé au dispositif à treillis 70. Lorsque les volets 36A, 36B, 36C sont dans la position dépliée, les extrémités 84C des pistes 82C sont connectées aux pistes 86, 87. La position des fils souples 80, 85 permet de ne pas gêner le coulissement des volets 36A, 36B, 36C.

Selon une variante, les dispositifs à treillis 42 et/ou 70 ne sont pas présents. Selon une autre variante, les dispositifs à treillis ont une structure multicouche. Selon une autre variante, les positions des volets 36A, 36B, 36C peuvent être détectées par des interrupteurs à contact additionnels permettant de doubler les informations d'ouverture/de fermeture.

Le fonctionnement du terminal de paiement 10 selon l'invention va maintenant être décrit en relation avec les figures 3 à 5. En fonctionnement normal, comme cela est représenté en figure 3, le réceptacle 24 est en position de fermeture et les volets 36A, 36B, 36C sont en position repliée. Les objets indésirables introduits par la fente 31 tombent dans le réceptacle 24 par l'ouverture 33 qui est dégagée. Le réceptacle 24 délimite avec les parois 16, 18, 19, 20, 21 et 22 une zone fermée et sécurisée 90. Une tentative d'intrusion au niveau des parois 16, 18, 19, 20, 21 et 22 est détectée par une interruption et/ou une altération du treillis 40. Une tentative d'intrusion au niveau du réceptacle 24 est détectée par une interruption et/ou une altération du dispositif à treillis 40 et/ou du dispositif à treillis 42. En particulier, le dispositif à treillis 42 permet de détecter une intrusion effectuée au niveau de la liaison entre le bord libre du réceptacle 24 et l'enceinte 15 du côté de la paroi arrière 16.

Lorsque la poubelle 24 est pleine, ce qui peut être détecté par un capteur, non représenté, ou lors d'une opération de maintenance régulière, un opérateur commande le terminal de paiement pour passer en mode de maintenance. Les volets 36A, 36B, 36C passent alors de la position repliée à la position déployée comme cela est représenté en figure 4. Une fois que les volets sont dans la position déployée, ce qui peut être détecté par la connexion du dispositif à treillis 70 au connecteur 46, ou par l'actionnement par le volet 36C d'un interrupteur à contact, non représenté, le terminal de paiement 10 peut autoriser un déplacement du réceptacle 24 de la position de fermeture à la position d'ouverture, comme cela est représenté en figure 5, ce qui permet de vider la poubelle 24.

Lorsque les volets 36A, 36B, 36C sont dans la position déployée, ils délimitent une nouvelle zone sécurisée 92 avec les parois 16, 18, 19, 20, 21 et 22. Le réceptacle 24 ne fait pas alors partie de la zone sécurisée 92. Une intrusion dans la zone sécurisée 92 au niveau des parois 16, 18, 19, 20, 21 et 22 est détectée par une interruption et/ou une altération du dispositif à treillis 40. Une intrusion dans la zone sécurisée 92 au niveau des volets 36A, 36B, 36C est détectée par une interruption et/ou une altération du dispositif à treillis 40 et/ou du dispositif à treillis 70. En particulier, le dispositif à treillis 70 permet de détecter une intrusion effectuée au niveau de la liaison entre le bord arrière du volet 36C et l'enceinte 15.

Lorsque l'opération de maintenance est terminée, le réceptacle 24 est amené de la position d'ouverture à la position de fermeture. Une fois que le réceptacle 24 est en position de fermeture, ce qui est détecté par l'intermédiaire de l'interrupteur 34, les volets 36A, 36B, 36C sont déplacés de la position déployée à la position repliée comme cela est représenté en figure 3. Le terminal de paiement 10 peut alors être utilisé de façon classique. Le processeur et le lecteur 12 du terminal 10 sont situés dans la zone sécurisée 90 ou 92 lors de l'opération de maintenance. Ils ne sont donc jamais accessibles à une personne non habilitée. L'opération de vidage du réceptacle 24 peut donc être réalisée sans déplacement du terminal 10.

Une tentative de fraude consisterait, lorsque le réceptacle 24 est amené de la position d'ouverture à la position de fermeture, à empêcher que le réceptacle 24 n'atteigne la position de fermeture pour bénéficier de l'ouverture des volets 36A, 36B, 36C. Toutefois, le déplacement des volets 36A, 36B, 36C de la position déployée à la position repliée ne peut être commandé seulement après que le réceptacle 24 a actionné l'interrupteur 34, c'est-à-dire lorsque le réceptacle 24 est amené complètement en position de fermeture. L'interrupteur 34 étant situé dans la zone sécurisée 90 ou la zone sécurisée 92, il n'est jamais accessible.

Une autre tentative de fraude consisterait à réaliser une ouverture dans le réceptacle 24, lorsqu'il est en position d'ouverture, ce qui permettrait par la suite d'accéder à la zone sécurisée 90 lorsque le réceptacle altéré 24 est en position de fermeture et que les volets 36A, 36B, 36C sont en position repliée. Toutefois, le dispositif à treillis 40 prévu au niveau du réceptacle 24 est connecté en permanence au système de détection associé quelle que soit la position du réceptacle 24. De ce fait, une dégradation du réceptacle 24 entraînerait une interruption et/ou une altération de la piste du dispositif de treillis 40, ce qui serait détecté.

Une autre tentative de fraude consisterait, lorsque le réceptacle 24 est en position d'ouverture, à court-circuiter le connecteur 46 de façon à faire croire que le dispositif à treillis 42 est relié au connecteur 46 alors que le réceptacle 24 n'est pas en position de fermeture. Toutefois, le système de détection du dispositif à treillis 42 détermine généralement l'impédance de la piste à laquelle il est connecté de sorte qu'un court-circuit de cette piste se traduirait par une variation d'impédance qui serait détectée. En outre, le dispositif à treillis 42 n'étant activé que lorsque le réceptacle 24 est dans la position de fermeture, un court-circuit du connecteur 46 alors que le réceptacle 24 n'est pas dans la position de fermeture serait détecté comme une intrusion dans la mesure où l'interrupteur 34 indiquerait que le réceptacle 24 n'est alors pas en position de fermeture.

La figure 8 est une vue analogue à la figure 5 d'un autre exemple de réalisation d'un terminal de paiement 100 selon l'invention. Le terminal de paiement 100 peut reprendre l'ensemble des éléments du terminal de paiement 10, les dispositifs à treillis n'étant pas représentés en figure 8. Le terminal 100 comprend, en outre, une puce 102 fixée au volet 36C et une puce 104 fixée au réceptacle 24. Les caractéristiques des puces 102, 104 sont définies lors d'une étape d'initialisation. Les puces 102, 104 sont adaptées à échanger des données à distance avec le processeur du terminal de paiement 100. Plus précisément, le processeur du terminal de paiement 100 est adapté à transmettre, par exemple à intervalles réguliers, une requête à la puce 102, et à comparer la réponse transmise par la puce 102 à la réponse attendue. Si la réponse fournie par la puce 102 n'est pas égale à la réponse attendue, ceci signifie que la puce 102 a été modifiée, ce qui correspond à une tentative de fraude. Un échange de données analogue peut être prévu entre la puce 104 et le processeur du terminal de paiement 100.

Des modes de réalisation particuliers de la présente invention ont été décrits. Diverses variantes et modifications apparaîtront à l'homme de l'art. En particulier, dans les exemples de réalisation décrits précédemment, le réceptacle 24 est déplacé entre les positions d'ouverture et de fermeture par un mouvement de pivotement. Toutefois, on peut prévoir que le déplacement du réceptacle 24 entre les positions d'ouverture et de fermeture corresponde à un mouvement de translation, à une combinaison d'un mouvement de pivotement et de translation, etc. En outre, dans les exemples de réalisation décrits précédemment, l'obturation de l'ouverture 33 est réalisée par des volets coulissants 36A, 36B, 36C. Toutefois, l'obturation de l'ouverture 33 peut être réalisée par n'importe quel système d'obturation, par exemple un système d'obturation comprenant un ou plusieurs volets pivotants, des volets en accordéon, un volet roulant, etc.

## Revendications

1. Terminal de paiement (10 ; 100) comprenant :
une enceinte sécuritaire (15) comportant une fente (31) et une ouverture (33) ;
un lecteur de cartes (30) disposé dans l'enceinte ;
un réceptacle (24) mobile par rapport à l'enceinte entre une première position dans laquelle le réceptacle est appliqué contre l'enceinte autour de l'ouverture de sorte qu'un objet autre qu'une carte introduit dans l'enceinte par la fente est susceptible de tomber au travers de l'ouverture dans le réceptacle, et une deuxième position dans laquelle le contenu du réceptacle est accessible depuis l'extérieur du terminal ; et
un système d'obturation (36A, 36B, 36C) sécurisé et mobile par rapport à l'enceinte entre une troisième position dans laquelle le système d'obturation ne recouvre pas complètement l'ouverture et une quatrième position dans laquelle le système d'obturation recouvre complètement l'ouverture.

2. Terminal selon la revendication 1, comprenant un interrupteur (34) disposé dans l'enceinte sécuritaire (15), le réceptacle (24) comprenant une portion (35) adaptée à actionner l'interrupteur lorsque le réceptacle est à la première position et à ne pas actionner l'interrupteur dès que le réceptacle quitte la première position.

3. Terminal selon la revendication 1 ou 2, comprenant, en outre, un premier dispositif (40) de protection comportant au moins une première piste conductrice (48, 49) s'étendant sur les parois (16, 18, 19, 20, 21, 22) de l'enceinte (15) et un premier système de détection d'une interruption et/ou d'une altération de la première piste.

4. Terminal selon la revendication 3, dans lequel la première piste s'étend au niveau du réceptacle (24) et/ou au niveau du système d'obturation (36A, 36B, 36C).

5. Terminal selon la revendication 3 ou 4, comprenant un deuxième dispositif (42) de protection comportant au moins une deuxième piste conductrice (60) s'étendant au niveau du réceptacle (24) et un deuxième système de détection d'une interruption et/ou d'une altération de la deuxième piste disposé dans l'enceinte (15), le terminal comprenant, en outre, un premier connecteur (46) adapté à connecter électriquement la deuxième piste au deuxième système de détection lorsque le réceptacle est dans la première position et à ne pas connecter électriquement la deuxième piste au deuxième système de détection dès que le réceptacle quitte la première position.

6. Terminal selon la revendication 5, comprenant un troisième dispositif (82) de protection comportant au moins une troisième piste conductrice (82A, 82B, 82C) s'étendant au niveau du système d'obturation (36A, 36B, 36C) et un troisième système de détection d'une interruption et/ou d'une altération de la troisième piste disposé dans l'enceinte (15), le terminal comprenant, en outre, un deuxième connecteur (46), correspondant éventuellement au premier connecteur, adapté à connecter électriquement la troisième piste au troisième système de détection lorsque le système d'obturation est dans la quatrième position et à ne pas connecter électriquement la troisième piste au troisième système de détection dès que le système d'obturation quitte la quatrième position.

7. Terminal selon l'une quelconque des revendications précédentes, dans lequel le terminal de paiement (100) comprend un processeur et dans lequel le réceptacle (24) et/ou le système d'obturation (36A, 36B, 36C) comprend une puce (102, 104) adaptée à échanger des signaux avec le processeur.

8. Terminal selon l'une quelconque des revendications précédentes, dans lequel le réceptacle (24) est relié à l'enceinte (15) par une liaison pivotante (32).

9. Terminal selon l'une quelconque des revendications précédentes, dans lequel le système d'obturation comprend au moins un volet (36A, 36B, 36B) coulissant et/ou pivotant.

10. Procédé d'utilisation du terminal de paiement (10 ; 100) selon l'une quelconque des revendications précédentes, le procédé comprenant les étapes suivantes, réalisées de façon successive :
amener le système d'obturation (36A, 36B, 36C) de la troisième position à la quatrième position, le réceptacle (24) étant dans la première position ;
amener le réceptacle de la première position à la deuxième position ;
vider, si nécessaire, le réceptacle ;
amener le réceptacle de la deuxième position d'obturation à la première position ; et
amener le système d'obturation de la quatrième position à la troisième position, le réceptacle étant dans la première position.
